# EUROPEAN PATENT APPLICATION

(11) **EP 4 664 407 A1**
(43) Date of publication of application: **17.12.2025**
(21) Application number: 24838348.1
(22) Date of filing: 21.03.2024
(51) Int. Cl.: G06T 15/00

(54) **INTERFACE DISPLAY METHOD AND RELATED APPARATUS**

(30) Priority: 12.07.2023 CN 202310862232
(71) Applicant: Honor Device Co., Ltd., Shenzhen, Guangdong 518040 (CN)
(72) Inventor: LI, Shijin, Shenzhen, Guangdong 518040 (CN); ZHOU, Jian, Shenzhen, Guangdong 518040 (CN)
(74) Representative: Thun, Clemens
(86) International application number: PCT/CN2024/082928
(87) International publication number: WO 2025/011088

(57) **Abstract**

This application provides an interface display method and a related apparatus. The method includes: when receiving an N^{th} frame of image transmitted by a display driver, a display screen refreshes and displays the N^{th} frame of image, where a corresponding frame rate during drawing and rendering of the N^{th} frame of image is a first frame rate; in a case that the display screen does not receive, within first duration in which the N^{th} frame of image is refreshed and displayed, an (N+1)^{th} frame of image transmitted by the display driver, the display screen skips reading the N^{th} frame of image from a cache and keeps displaying the N^{th} frame of image, where the first duration is longer than periodicity duration corresponding to the first frame rate; and after the first duration after the display screen refreshes and displays the N^{th} frame of image, the display screen refreshes and displays the (N+1)^{th} frame of image when the display screen receives the (N+1)^{th} frame of image transmitted by the display driver, where a corresponding frame rate during drawing and rendering of the (N+1)^{th} frame of image is a second frame rate, and the second frame rate is less than the first frame rate. A refresh rate is adaptively adjusted, an image refresh frequency is reduced, and power consumption is reduced.

## Description

This application claims priority to Chinese Patent Application No. 202310862232.7, filed with the China National Intellectual Property Administration on July 12, 2023 and entitled "INTERFACE DISPLAY METHOD AND RELATED APPARATUS", which is incorporated herein by reference in its entirety.

### TECHNICAL FIELD

This application relates to the field of terminal technologies, and in particular, to interface display method and related apparatus.

### BACKGROUND

Currently, a terminal device can support a plurality of screen refresh rates, for example, 60 times per second (Hz), 90 Hz, 120 Hz, or 144 Hz. The screen refresh rate may be consistent with an application frame rate, or may be inconsistent with the application frame rate.

How to reduce power consumption of the terminal device based on a relationship between the screen refresh rate and the application frame rate is a problem that needs to be resolved.

### SUMMARY

Embodiments of this application provide an interface display method and a related apparatus that are applied to the field of terminal technologies. A display driver chip of a display screen may adaptively adjust a refresh rate. When a display driver does not perform image transmitting for display, an image is not read from a cache for image refresh, and the image refresh is performed until preset duration is reached or the image is transmitted for display. In this way, the image refresh is performed based on time for the image transmitting for display, so that a quantity of times of image refreshing can be reduced when no new composited image is transmitted for display, and power consumption of the display screen is reduced.

According to a first aspect, an embodiment of this application provides an interface display method. The method includes: When receiving an image transmitted by a display driver, a display screen refreshes and displays the image transmitted by the display driver; when receiving an N^{th} frame of image transmitted by the display driver, the display screen refreshes and displays the N^{th} frame of image, where a corresponding frame rate during drawing and rendering of the N^{th} frame of image is a first frame rate; in a case that the display screen does not receive, within first duration in which the N^{th} frame of image is refreshed and displayed, an (N+1)^{th} frame of image transmitted by the display driver, the display screen skips reading the N^{th} frame of image from a cache and keeps displaying the N^{th} frame of image, where the first duration is longer than periodicity duration corresponding to the first frame rate; and after the first duration after the display screen refreshes and displays the N^{th} frame of image, the display screen refreshes and displays the (N+1)^{th} frame of image when the display screen receives the (N+1)^{th} frame of image transmitted by the display driver, where a corresponding frame rate during drawing and rendering of the (N+1)^{th} frame of image is a second frame rate, and the second frame rate is less than the first frame rate.

In this way, when an application frame rate decreases, a refresh rate of the display screen is adaptively adjusted to be reduced, to reduce an image refresh frequency of the display screen and to reduce power consumption. A terminal device may adaptively adjust the refresh rate. The refresh rate is high in some scenarios, to meet a smoothness requirement. The refresh rate is low in some scenarios, to reduce power consumption. In addition, the refresh rate of the display screen is adjusted based on the image transmitted for display, and the application frame rate does not need to be identified. The foregoing method may be used in a scenario with a low frame rate, for example, a video scenario or a camera scenario, which has many coverage scenarios, a wide application range, and high practicability.

Optionally, before the display screen refreshes and displays when receiving the image transmitted by the display driver, the method further includes: the terminal device obtains display screen brightness and/or ambient light intensity; and that the display screen refreshes and displays when receiving an image transmitted by the display driver includes: when the display screen brightness is greater than a first value, and/or the ambient light intensity is greater than a second value, the display screen refreshes and displays when receiving the image transmitted by the display driver.

In this way, the terminal device can implement adaptive refresh in a case in which the display screen brightness and/or the ambient light intensity satisfies a condition, to reduce power consumption. The adaptive refresh is not used in other scenarios, to reduce a problem, for example, screen flicker caused by switching of a refresh rate.

Optionally, the method further includes: The terminal device determines a first refresh rate based on the display screen brightness and/or the ambient light intensity; and in a case that the display screen does not receive, within third duration after refreshing and displaying the N^{th} frame of image, the (N+1)^{th} frame of image transmitted by the display driver, in the third duration after the N^{th} frame of image is refreshed and displayed, the display screen reads the N^{th} frame of image from the cache, and refreshes and displays the N^{th} frame of image, where the third duration is periodicity duration corresponding to the first refresh rate.

In this way, a minimum refresh rate is set based on the display screen brightness and/or the ambient light intensity, to reduce energy consumption as much as possible in a case that screen flicker of the terminal device is reduced. Image refresh display flickering caused by long refresh time during adaptive refresh may be reduced.

Optionally, the terminal device stores a first correspondence, the first correspondence is a relationship between the display screen brightness and the first refresh rate; and that the terminal device determines a first refresh rate based on the display screen brightness and/or the ambient light intensity includes: The terminal device determines the first refresh rate based on the display screen brightness and the first correspondence; or the terminal device stores a second correspondence; the second correspondence is a relationship between the ambient light intensity and the first refresh rate; and that the terminal device determines a first refresh rate based on the display screen brightness and/or the ambient light intensity includes: The terminal device determines the first refresh rate based on the ambient light intensity and the second correspondence; or the terminal device stores a third correspondence; the third correspondence is a relationship between the display screen brightness, the ambient light intensity, and the first refresh rate; and that the terminal device determines a first refresh rate based on the display screen brightness and the ambient light intensity includes: The terminal device determines the first refresh rate based on the display screen brightness, the ambient light intensity, and the third correspondence.

In this way, it is convenient for the terminal device to determine the minimum refresh rate, and this is simple and easy to implement.

Optionally, the method further includes: When the display screen brightness is less than or equal to the first value, and the ambient light intensity is less than or equal to the second value, the display screen refreshes and displays at a preset refresh rate, where the preset refresh rate is related to a foreground running application of the terminal device; when receiving an M^{th} frame of image transmitted by the display driver, the display screen refreshes and displays the M^{th} frame of image, where a corresponding frame rate during drawing and rendering of the M^{th} frame of image is a third frame rate; in a case that the display screen does not receive, within second duration after the M^{th} frame of image is refreshed and displayed, an (M+1)^{th} frame of image transmitted by the display driver, in the second duration after a first application interface is refreshed and displayed, the display screen reads the M^{th} frame of image from the cache, and refreshes and displays the M^{th} frame of image, where the second duration is periodicity duration corresponding to the third frame rate; and after receiving the (M+1)^{th} frame of image transmitted by the display driver, the display screen refreshes and displays the (M+1)^{th} frame of image, where a corresponding frame rate during drawing and rendering of the N^{th} frame of image is a fourth frame rate, and the fourth frame rate is less than the third frame rate.

In this way, when the application frame rate decreases, the terminal device can adaptively adjust the refresh rate of the display screen to be reduced, to reduce the image refresh frequency of the display screen and to reduce the power consumption.

Optionally, the terminal device pre-stores an application list. An application corresponding to the N^{th} frame of image is an application in the application list. An application corresponding to the (N+1)^{th} frame of image and the application corresponding to the N^{th} frame of image are same.

In this way, the terminal device can determine, based on the application, whether to perform the adaptive refresh.

Optionally, the N^{th} frame of image is an image that includes an on-screen comment, and the (N+1)^{th} frame of image is an image that does not include an on-screen comment.

In this way, when there is an on-screen comment, the refresh rate of the display screen is high, to meet smoothness of on-screen comment display. When there is no on-screen comment, the refresh rate of the display screen is reduced, to reduce power consumption of the terminal device, and improve user experience.

Optionally, the N^{th} frame of image is an image corresponding to a first scene. The (N+1)^{th} frame of image is an image corresponding to a second scene. The first scene is a battle scene of a game application, and the second scene is a non-battle scene of the game application.

In this way, in a scenario like a game battle scene with a high requirement on smoothness, the refresh rate of the display screen is high, to meet smoothness of on-screen comment display. In a scenario like a game hall scene with a low requirement on smoothness, the refresh rate of the display screen is reduced, to reduce the power consumption of the terminal device, and improve the user experience.

Optionally, the N^{th} frame of image is an image including a motion effect, and the (N+1)^{th} frame of image is an image not including a motion effect.

In this way, when there is a motion effect, the refresh rate of the display screen is high, to meet smoothness of on-screen comment display. When there is no motion effect, the refresh rate of the display screen is reduced, to reduce power consumption of the terminal device, and improve user experience.

According to a second aspect, an embodiment of this application provides a terminal device. The terminal device may also be referred to as a terminal (terminal), user equipment (user equipment, UE), a mobile station (mobile station, MS), a mobile terminal (mobile terminal, MT), or the like. The terminal device may be a mobile phone (mobile phone), a smart television, a wearable device, a pad (Pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

The terminal device includes:
The terminal device includes a processor and a memory. The memory stores computer-executable instructions. The processor executes the computer-executable instructions stored in the memory, to cause the terminal device to perform the method according to the first aspect.

According to a third aspect, an embodiment of this application provides a computer-readable storage medium. The computer-readable storage medium stores a computer program. When the computer program is executed by a processor, the method according to the first aspect is implemented.

According to a fourth aspect, an embodiment of this application provides a computer program product. The computer program product includes a computer program. When the computer program is run, a computer is enabled to perform the method according to the first aspect.

According to a fifth aspect, an embodiment of this application provides a chip. The chip includes a processor. The processor is configured to invoke a computer program in a memory, to perform the method according to the fourth aspect.

It should be understood that the second aspect to the fifth aspect of this application correspond to the technical solutions of the first aspect of this application, and the beneficial effects obtained by each aspect and the corresponding feasible implementations are similar. Details are not described herein again.

### BRIEF DESCRIPTION OF DRAWINGS

FIG. 1 is a schematic diagram of a display procedure in a possible design;
FIG. 2 is a schematic diagram of a display procedure according to an embodiment of this application;
FIG. 3 is a schematic diagram of a structure of software framework of a terminal device according to an embodiment of this application;
FIG. 4 is a schematic flowchart of internal module interaction corresponding to an interface display method according to an embodiment of this application;
FIG. 5 is a schematic diagram of a display procedure according to an embodiment of this application;
FIG. 6 is a schematic flowchart of an interface display method according to an embodiment of this application;
FIG. 7A is a schematic diagram of an application scenario according to an embodiment of this application;
FIG. 7B is a schematic diagram of a display procedure according to an embodiment of this application;
FIG. 8 is a schematic diagram of an application scenario according to an embodiment of this application; and
FIG. 9 is a schematic diagram of a structure of a terminal device according to an embodiment of this application.

### DESCRIPTION OF EMBODIMENTS

For ease of understanding of embodiments of this application, some terms involved in this application are first briefly described.
1. Frame: The frame refers to a smallest unit of a single picture in interface display. One frame may be understood as a still picture, and displaying a plurality of consecutive frames in rapid succession may form a false phenomenon of motion of an object. A frame rate refers to a quantity of frames of a picture refreshed in one second, and may also be understood as a quantity of times a graphics processing unit refreshes the picture per second in a terminal device. A smoother and more realistic animation may be obtained at a higher frame rate. More frames per second indicate a smoother displayed action.
   It should be noted that processes such as drawing, rendering, and compositing need to be performed before an interface displays a frame.
2. Drawing: The drawing is picture drawing of a display interface. The display interface may include one or more views. Each view may be drawn by a visual control of a view system. Each view includes subviews. One subview corresponds to one part in the view. For example, one subview corresponds to one symbol in an image view.
3. Rendering: The rendering is to, for example, perform a coloring operation on or adding a 3D effect to a drawn view. For example, the 3D effect may be a lighting effect, a shadow effect, a texture effect, or the like.
4. Compositing: The compositing refers to a process of compositing one or more rendered views into a display interface.
5. Other terms

In embodiments of this application, terms such as "first" and "second" are used to distinguish same or similar items with a basically same function and role. For example, a first chip and a second chip are merely used to distinguish different chips, and are not intended to limit a sequence thereof. A person skilled in the art may understand that the terms such as "first" and "second" do not limit a quantity and an execution order, and the terms such as "first" and "second" do not indicate a definite difference.

It should be noted that in embodiments of this application, the term like "example" and "for example" is used to represent giving an example, an illustration, or a description. Any embodiment or design solution described as an "example" or "for example" in this application should not be explained as being more preferred or having more advantages than another embodiment or design solution. Exactly, use of the terms such as "example" or "for example" is intended to present a related concept in a specific manner.

In embodiments of this application, "at least one" refers to one or more, and "a plurality of" refer to two or more. The term "and/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. The term "at least one of the following items (pieces)" or similar expressions indicate any combination of these items, including a single item (piece) or any combination of a plurality of items (pieces). For example, at least one of a, b, or c may indicate: a, b, c, a and b, a and c, b and c, or a, b, and c, where a, b, and c may be singular or plural.

### 6. Terminal device

The terminal device in embodiments of this application may be any form of electronic device. For example, the electronic device may include a handheld device, a vehicle-mounted device, and the like. For example, some electronic devices are a mobile phone (mobile phone), a tablet computer, a palmtop computer, a notebook computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, a wearable device, a terminal device in a 5G network, a terminal device in a future evolved public land mobile network (public land mobile network, PLMN), or the like. This is not limited in embodiments of this application.

As an example rather than a limitation, in embodiments of this application, the electronic device may alternatively be a wearable device. The wearable device may also be referred to as a wearable intelligent device, and is a collective term for wearable devices that are intelligently designed and developed for daily wear by using a wearable technology, for example, glasses, gloves, watches, clothes, and shoes. The wearable device is a portable device that is directly worn on a body or integrated into a cloth or an accessory of a user. The wearable device is not merely a hardware device, but implements a powerful function through software support, data exchange, and cloud interaction. In a broad sense, the smart wearable device includes full-function and large-size devices that can implement complete or partial functions without depending on smartphones, such as smart watches or smart glasses, and devices that focus on a specific type of application function and need to be used together with other devices such as smartphones, such as various smart bands or smart jewelry for monitoring physical signs.

In addition, in embodiments of this application, the electronic device may alternatively be a terminal device in an Internet of things (Internet of things, IoT) system. IoT is an important part in future development of information technologies, and is mainly technically characterized in that things are connected to networks through communication technologies, so as to achieve intelligent networks of human-machine interconnection and interconnection between things.

The electronic device in embodiments of this application may also be referred to as a terminal device, user equipment (user equipment, UE), a mobile station (mobile station, MS), a mobile terminal (mobile terminal, MT), an access terminal, a user unit, a user station, a mobile site, a mobile station, a remote station, a remote terminal, a mobile device, a user terminal, a terminal, a wireless communication device, a user agent, or a user apparatus.

In embodiments of this application, the electronic device or each network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (which is also referred to as a main memory). The operating system may be any one or more computer operating systems for implementing service processing through a process (process), for example, a Linux operating system, a Unix operating system, an Android operating system, an iOS operating system, or a windows operating system. The application layer includes applications such as a browser, an address book, word processing software, and instant messaging software.

Currently, a terminal device can support a plurality of screen refresh rates, for example, 60 times per second (Hz), 90 Hz, 120 Hz, or 144 Hz. The screen refresh rate may be consistent with an application frame rate, or may be inconsistent with the application frame rate.

In a scenario with a low application frame rate, for example, a video scenario or a camera scenario, content such as an on-screen comment and a motion effect may need to be displayed. To smoothly display content such as the on-screen comment and the motion effect, a screen refresh rate is usually greater than a frame rate in the scenario with the low application frame rate, for example, the video scenario or the camera scenario.

In a possible design, in a video playback scenario, if there is an on-screen comment to be displayed, the terminal device composites images and displays the images at a frequency of 60 frames per second, to improve smoothness of on-screen comment display. When the on-screen comment disappears, the terminal device composites images at a frequency of 30 frames per second, and the terminal device continues to refresh and display images at the frequency of 60 frames per second, resulting in high power consumption. In addition, when the terminal device pauses playing of a video, a display screen of the terminal device continues to refresh and display an image at the frequency of 60 frames per second, resulting in high power consumption.

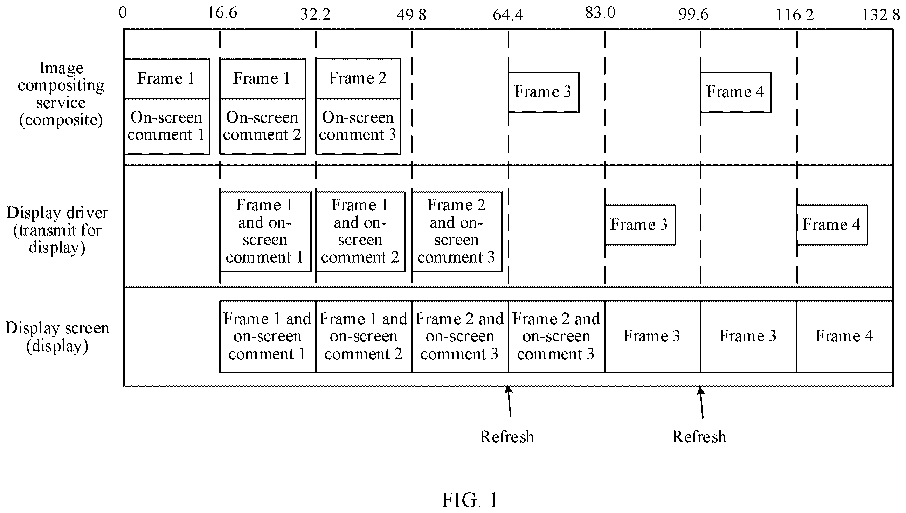

For example, FIG. 1 is a schematic diagram of a display procedure in a possible design. An example in which a video is played at 30 frames per second and an on-screen comment is displayed at 60 frames per second is used. In FIG. 1, the video corresponds to a frame 1, a frame 2, and a frame 3. The on-screen comment corresponds to an on-screen comment 1, an on-screen comment 2, and an on-screen comment 3. Because the on-screen comment is displayed at 60 frames per second, a display screen is refreshed at 60 frames per second.

At 0 ms, an image compositing service (surface flinger) in a terminal device composites the frame 1 and the on-screen comment 1.

At 16.6 ms, the image compositing service composites the frame 1 and the on-screen comment 2, and a display driver transmits the composited frame 1 and on-screen comment 1 to the display screen for display. The display screen starts to display the frame 1 and the on-screen comment 1.

At 33.2 ms, the image compositing service composites the frame 2 and the on-screen comment 3, and the display driver transmits the composited frame 1 and on-screen comment 2 to the display screen for display. The display screen starts to display the frame 1 and the on-screen comment 2.

At 49.8 ms, on-screen comment display is completed, the image compositing service does not perform compositing, and the display driver transmits the composited frame 2 and on-screen comment 3 to the display screen for display. The display screen starts to display the frame 2 and the on-screen comment 3.

At 64.4 ms, the image compositing service composites the frame 3. Because a compositing operation is not performed by the image compositing service at 49.8 ms, the display driver transmits no composited image to the display screen. The display screen reads the displayed frame 2 and the on-screen comment 3 from a cache, and refreshes and displays the frame 2 and the on-screen comment 3.

At 83.0 ms, the image compositing service does not perform compositing, and the display driver transmits the composited frame 3 to the display screen. The display screen refreshes and displays the frame 3.

At 99.6 ms, the image compositing service composites the frame 4. Because a compositing operation is not performed by the image compositing service at 83.0 ms, the display driver transmits no composited image to the display screen. The display screen reads the frame 3 from the cache, and refreshes and displays the frame 3.

At 116.2 ms, the image compositing service does not perform compositing, and the display driver transmits the composited frame 4 to the display screen. The display screen refreshes and displays the frame 4.

It may be learned from FIG. 1 that at 64.4 ms and 99.6 ms, when no new image is transmitted for display on the display screen of the terminal device, the image is still read from the cache of the display screen, and the image is refreshed and displayed. In this way, power consumption of the terminal device is large.

In view of this, an embodiment of this application provides a refresh rate switching method and a related apparatus. A display driver chip of a display screen may adaptively adjust a refresh rate. When a display driver does not perform image transmitting for display, an image is not read from a cache for image refresh, and the image refresh is performed until preset duration is reached or the image is transmitted for display. In this way, the image refresh is performed based on time for the image transmitting for display, so that a quantity of times of image refreshing can be reduced when no new composited image is transmitted for display, and power consumption of the display screen is reduced.

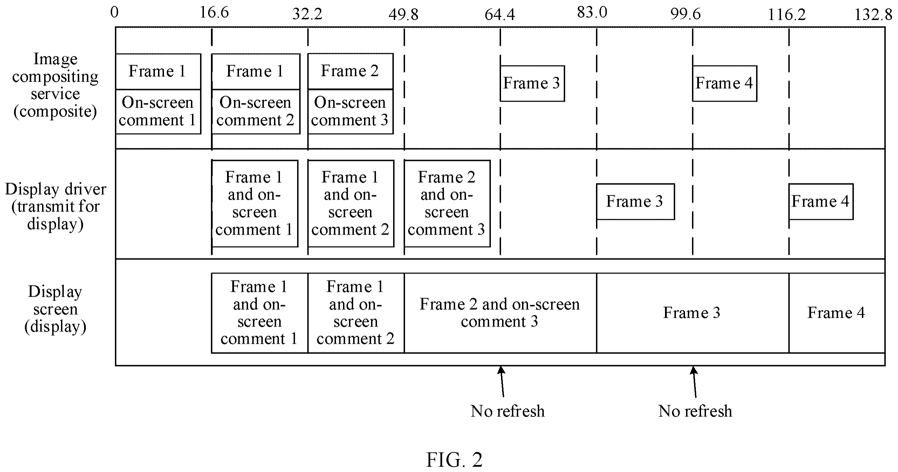

A display procedure of adaptive refresh is described below with reference to FIG. 2.

For example, FIG. 2 is a schematic diagram of a display procedure according to an embodiment of this application. An example in which a video is played at 30 frames per second and an on-screen comment is displayed at 60 frames per second is used. In FIG. 2, the video corresponds to a frame 1, a frame 2, and a frame 3. The on-screen comment corresponds to an on-screen comment 1, an on-screen comment 2, and an on-screen comment 3. Because the on-screen comment is displayed at 60 frames per second, a display screen is refreshed at 60 frames per second.

In FIG. 2, the video corresponds to the frame 1, the frame 2, and the frame 3. The on-screen comment corresponds to the on-screen comment 1, the on-screen comment 2, and the on-screen comment 3. Because the on-screen comment is displayed at 60 frames per second, the display screen is refreshed at 60 frames per second.

At 0 ms, an image compositing service (surface flinger) in a terminal device composites the frame 1 and the on-screen comment 1.

At 16.6 ms, the image compositing service composites the frame 1 and the on-screen comment 2, and a display driver transmits the composited frame 1 and on-screen comment 1 to the display screen for display. The display screen starts to display the frame 1 and the on-screen comment 1.

At 33.2 ms, the image compositing service composites the frame 2 and the on-screen comment 3, and the display driver transmits the composited frame 1 and on-screen comment 2 to the display screen for display. The display screen starts to display the frame 1 and the on-screen comment 2.

At 49.8 ms, on-screen comment display is completed, the image compositing service does not perform compositing, and the display driver transmits the composited frame 2 and on-screen comment 3 to the display screen for display. The display screen starts to display the frame 2 and the on-screen comment 3.

At 64.4 ms, the image compositing service composites the frame 3. Because a compositing operation is not performed by the image compositing service at 49.8 ms, the display driver transmits no composited image to the display screen. The display screen does not read the frame 2 and the on-screen comment 3 from a cache, does not refresh the image, and keeps displaying the frame 2 and the on-screen comment 3.

At 83.0 ms, the image compositing service does not perform compositing, and the display driver transmits the composited frame 3 to the display screen. The display screen refreshes and displays the frame 3.

At 99.6 ms, the image compositing service composites the frame 4. Because a compositing operation is not performed by the image compositing service at 83.0 ms, the display driver transmits no composited image to the display screen. The display screen does not read the frame 3 from the cache, does not refresh the image, and keeps displaying the frame 3.

At 116.2 ms, the image compositing service does not perform compositing, and the display driver transmits the composited frame 4 to the display screen. The display screen refreshes and displays the frame 4.

It can be learned from FIG. 2 that at 64.4 ms and 99.6 ms, when no image is transmitted for display on the display screen of the terminal device, the display screen does not read the image from the cache and does not refresh the image. Compared with the display procedure shown in FIG. 1, in the procedure shown in FIG. 2, the quantity of times of image refreshing of the display screen is less, so that power consumption of the terminal device can be reduced.

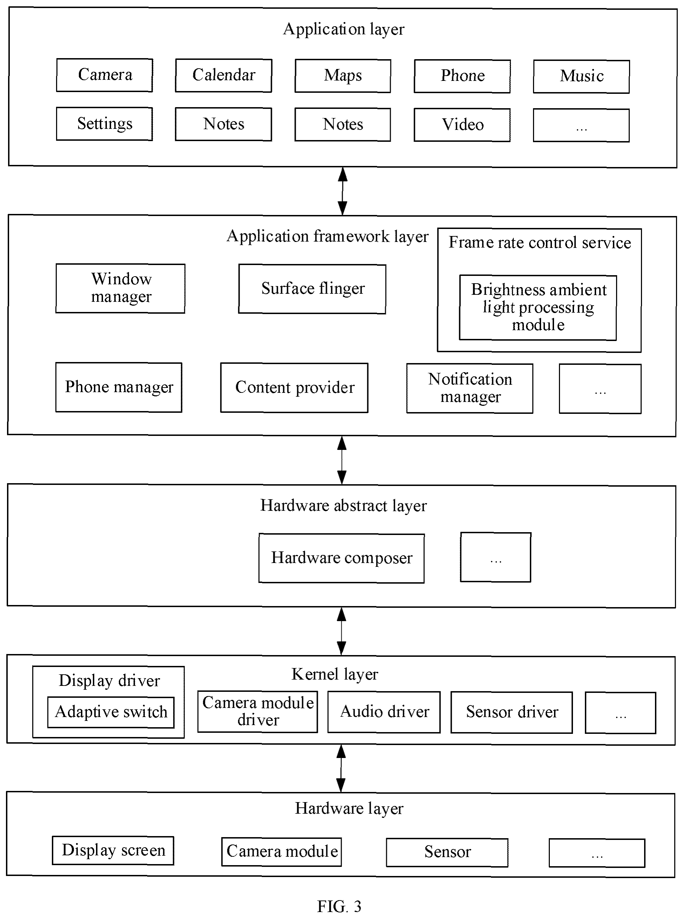

The method provided in embodiments of this application is described below with reference to FIG. 3 to FIG. 7B.

For ease of understanding, a software framework of a terminal device is described below. A software system of the terminal device may use a layered architecture, an event-driven architecture, a microkernel architecture, a micro service architecture, or a cloud architecture.

An example in which an Android system with a layered architecture is used to illustrate a software structure of the terminal device. For example, FIG. 3 is a schematic diagram of a structure of software framework of a terminal device according to an embodiment of this application. As shown in FIG. 3, the layered architecture divides the software system of the terminal device into several layers, and each layer has a clear role and task. Layers communicate with each other through software interfaces. In some embodiments, the Android system is divided into five layers: an application (applications) layer, an application framework (application framework) layer, a hardware abstract layer (hardware abstract layer, HAL), a kernel (kernel) layer, and a hardware layer.

The application layer may include a series of application packages. The application layer runs applications by invoking an application programming interface (application programming interface, API) provided by the application framework layer. As shown in FIG. 3, the application packages may include applications, such as Camera, Calendar, Maps, Phone, Music, Settings, Notes, and Video.

The application framework layer provides the API and a programming framework for the applications at the application layer. The application framework layer includes some predefined functions. As shown in FIG. 3, the application framework layer may include a window manager, an image compositing service a frame rate control service, a content provider, a phone manager, a resource manager, a notification manager, and the like.

The window manager is configured to manage a window application. The window manager may obtain a size of a display screen, determine whether there is a status bar, lock a screen, perform screen capturing, and the like.

The image compositing service is configured to composite images and transmit the composited image to a display driver, to display the image on the display screen. For example, the image compositing service may composite images drawn and rendered by one or more applications.

The frame rate control service is configured to adjust a refresh rate of the display screen by using the display driver. In some embodiments, the frame rate control service includes a brightness ambient light processing module. The brightness ambient light processing module is configured to control an adaptive switch in the display driver to be turned on or turned off based on display screen brightness and ambient light intensity of the terminal device, to adjust a refresh strategy of the display screen. When the display screen brightness is greater than a first value, and the ambient light intensity is greater than a second value, the brightness ambient light processing module controls the adaptive switch in the display driver to be turned on, to implement adaptive refresh of the display screen. When the display screen brightness is less than or equal to the first value, or the ambient light intensity is less than or equal to the second value, the brightness ambient light processing module controls the adaptive switch in the display driver to be turned off, and the display screen refreshes at a particular frequency.

A sensor service is configured to obtain the display screen brightness of the terminal device and the ambient light intensity of the terminal device.

The content provider is configured to store and obtain data, and enable the data to be accessible by the application. The data may include a video, an image, audio, phone calls made and answered, a browsing history and bookmarks, a phone book, and the like. A view system includes visual controls, such as a control for displaying text and a control for displaying an image.

The phone manager is configured to provide a communication function of the terminal device, for example, call status management (including connected, hang-up, and the like).

The resource manager provides various resources, such as a localized character string, an icon, a picture, a layout file, and a video file, for an application.

The notification manager enables an application to display notification information in a status bar, and may be configured to convey an informative message that may automatically disappear after a short stay without user interaction. For example, the notification manager is configured to inform completion of downloading, providing a message reminder, and the like. The notification manager may alternatively provide, on a status bar at the top of the system, a notification in a form of a chart or scroll bar text, for example, a notification of an application running in the background, or provide, on a screen, a notification in a form of a dialog window. For example, text information reminding is performed in the status bar, a reminding tone is made, the terminal device vibrates, or an indicator light flashes.

The hardware abstract layer may include a plurality of library modules. The library modules may be a hardware composer, and the like. The Android system may load a corresponding library module for device hardware, and then achieve a purpose of accessing the device hardware by the application framework layer. The device hardware may include, for example, the display screen in the terminal device.

The kernel layer is a layer between hardware and software. The kernel layer is configured to drive hardware, to enable the hardware to work. The kernel layer includes at least a display driver, a camera module driver, an audio driver, a sensor driver, and the like. This is not limited in embodiments of this application.

In some embodiments, the display driver includes an adaptive switch. The adaptive switch is configured to control a refresh strategy of the display screen. When the adaptive switch is turned on, the display screen does not perform refresh when the display driver transmits no image for display, and performs refresh until preset duration is reached or the display driver transmits an image for display. When the adaptive switch is turned off, the display screen refreshes at a particular frequency, and also refreshes when the display driver does not transmit an image for display.

A display procedure of the terminal device is described below with reference to FIG. 3.

An application invokes, by using a view system of an application framework layer, an image rendering library in a system library to draw and render an image, and then transmits the drawn and rendered image to a cache queue of an image compositing service. The image compositing service composites the drawn and rendered images of one or more applications and transmits the composited image to a display driver. The display driver transmits the composited image to a display screen to display.

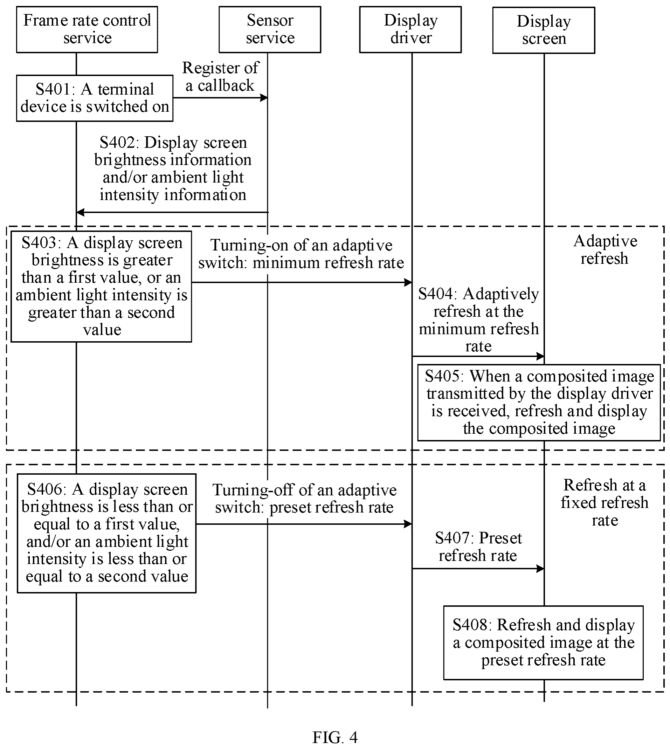

For example, FIG. 4 is a schematic flowchart of internal module interaction corresponding to an interface display method according to an embodiment of this application. A terminal device includes a frame rate control service, a display driver, an application, an image compositing service, and a display screen. As shown in FIG. 4, an interaction procedure includes the following steps.

S401: After switching-on, the frame rate control service registers a callback with a sensor service, to obtain display screen brightness of the terminal device and/or ambient light intensity of the terminal device.

In some embodiments, after switching-on, the frame rate control service registers the callback with the sensor service, to subsequently update the display screen brightness and/or the ambient light intensity or obtain display screen brightness change information and/or ambient light intensity change information when the display screen brightness of the terminal device changes or the ambient light intensity of the terminal device changes.

In some other embodiments, the frame rate control service may alternatively obtain the display screen brightness and/or the ambient light intensity of the terminal device from the sensor service at a preset time interval. A manner in which the frame rate control service obtains the display screen brightness and the ambient light intensity is not limited in embodiments of this application.

S402: The sensor service transmits the display screen brightness information and/or the ambient light intensity information to the frame rate control service.

The display screen brightness information indicates brightness of the display screen or indicates a brightness change of the display screen. The ambient light intensity information indicates the ambient light intensity, or indicates a change of the ambient light intensity.

The frame rate control service determines a refresh strategy of the display screen of the terminal device based on the display screen brightness, the ambient light intensity, and a preset condition.

When the display screen brightness is greater than a first value, and/or the ambient light intensity is greater than a second value, the terminal device performs S403 to S405. When the display screen brightness is less than or equal to the first value, and the ambient light intensity is less than or equal to the second value, the terminal device performs S406 and S405.

S403: When the display screen brightness is greater than the first value, and/or the ambient light intensity is greater than the second value, the frame rate control service transmits, to the display driver, a message indicating that an adaptive switch is turned on.

The first value may be 50 nit, 60 nit, or any other value. The second value may be 50 lux, 60 lux, or any other value. Specific values of the first value and the second value are not limited in embodiments of this application.

It should be noted that under different display screen brightness and ambient light intensity, human eyes feel different about the terminal device. If light is dark or the display screen brightness is low, flicker may be perceived by the human eyes when the terminal device switches a refresh rate, resulting in low user experience.

It may be understood that the terminal device may determine, only based on the display screen brightness, whether the adaptive switch is turned on or turned off; the terminal device may alternatively determine, only based on the ambient light intensity, whether the adaptive switch is turned on or turned off; the terminal device may alternatively determine, based on the display screen brightness and the ambient light intensity, whether the adaptive switch is turned on or turned off. This is not limited in embodiments of this application.

In some embodiments, the frame rate control service transmits a message to the display driver by using an interface.

S404: After receiving the message indicating that the adaptive switch is turned on, the display driver transmits, to the display screen, a message indicating adaptive refresh.

S405: When receiving a composited image transmitted by the display driver, the display screen refreshes and displays the composited image.

In embodiments of this application, the display screen includes a display driver chip (display driver IC, DDIC). The display driver chip may control refresh of the display screen of the terminal device and a refresh interval time.

S406: When the display screen brightness is less than or equal to the first value, and the ambient light intensity is less than or equal to the second value, the frame rate control service transmits, to the display driver, a message indicating a preset refresh rate.

S407: After receiving the message indicating the preset refresh rate, the display driver transmits, to the display screen, the message indicating the preset refresh rate.

S408: The display screen refreshes and displays the composited image at the preset refresh rate.

The preset refresh rate may be 60 Hz, 120 Hz, or any other value. This is not limited in embodiments of this application.

In a possible implementation, the preset refresh rate is related to a foreground running application of the terminal device. When the foreground running application is a video application, the preset refresh rate may be 60 Hz. When the foreground running application is a game application, the preset refresh rate may be 120 Hz.

The preset refresh rate may further be related to running load of the terminal device, and the like. A manner of determining the preset refresh rate is not limited in embodiments of this application.

In this way, when the display screen brightness is high, and/or the ambient light intensity is high, the terminal device can control the adaptive refresh to reduce a refresh frequency of the display screen and reduce power consumption. When the display screen brightness is low, and the ambient light intensity is low, the terminal device can control the terminal device to refresh at the preset refresh rate, to reduce a problem, for example, screen flicker caused by switching of the refresh rate.

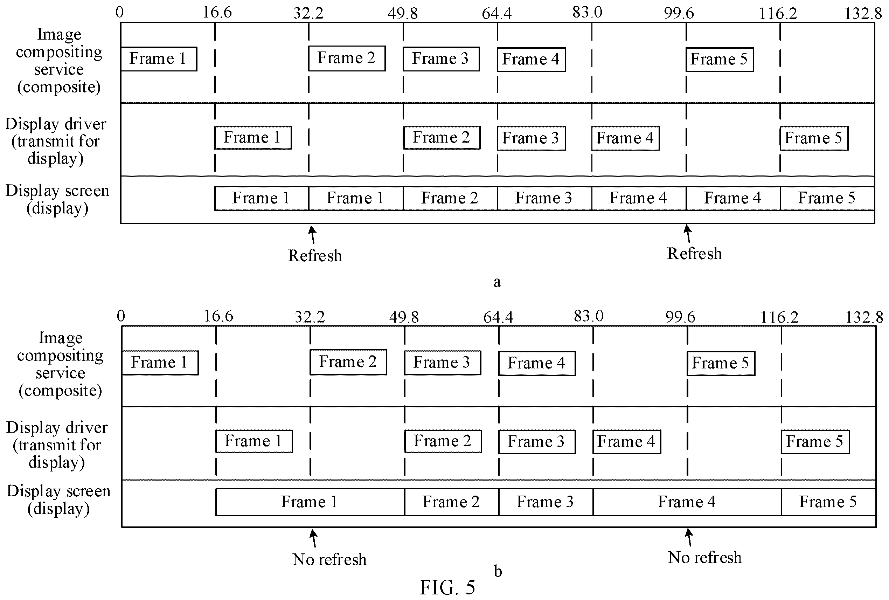

The two refresh strategies provided in FIG. 4 is described below with reference to FIG. 5. An example in which the image compositing service (surface flinger) separately composites a frame 1, a frame 2, a frame 3, a frame 4, and a frame 5 at 0 ms, 32.2 ms, 49.8 ms, 64.4 ms, and 99.6 ms is used.

When the display screen brightness is less than or equal to the first value, and the ambient light intensity is less than or equal to the second value, a display procedure of the terminal device may be shown in a in FIG. 5. Specifically, at 16.6 ms, 49.8 ms, 64.4 ms, 83.0 ms, and 116.2 ms, the display driver transmits the composited frame 1, the composited frame 2, the composited frame 3, the composited frame 4, and the composited frame 5 to the display screen, separately. Adaptively, at 16.6 ms, 49.8 ms, 64.4 ms, 83.0 ms, and 116.2 ms, the display screen starts to display the composited frame 1, the composited frame 2, the composited frame 3, the composited frame 4, and the composited frame 5, separately.

If the display screen does not receive, at 32.2 ms, the composited frame transmitted by the display driver, the display screen reads the composited frame 1 from a cache, and refreshes and displays the composited frame 1. If the display screen does not receive, at 99.6 ms, the composited frame transmitted by the display driver, the display screen reads the composited frame 4 from the cache, and refreshes and continues to display the composited frame 4.

In this way, a refresh rate of the display screen is fixed, so that a problem, for example, screen flicker caused by switching of the refresh rate can be reduced, and user experience is improved.

When the display screen brightness is greater than the first value, or the ambient light intensity is greater than the second value, the display procedure of the terminal device may be shown in a in FIG. 5. Specifically, at 16.6 ms, 49.8 ms, 64.4 ms, 83.0 ms, and 116.2 ms, the display driver transmits the composited frame 1, the composited frame 2, the composited frame 3, the composited frame 4, and the composited frame 5 to the display screen, separately. Adaptively, at 16.6 ms, 49.8 ms, 64.4 ms, 83.0 ms, and 116.2 ms, the display screen starts to display the composited frame 1, the composited frame 2, the composited frame 3, the composited frame 4, and the composited frame 5, separately.

If the display screen does not receive, at 32.2 ms, the composited frame transmitted by the display driver, the display screen does not read the composited frame from the cache, and does not perform image refresh and keeps displaying the composited frame 1. If the display screen does not receive, at 99.6 ms, the composited frame transmitted by the display driver, the display screen does not read the composited frame from the cache, does not perform image refresh, and keeps displaying the composited frame 4.

Compared with the procedure shown in a in FIG. 5, in the procedure shown in b in FIG. 5, two image refreshes may be reduced, so that the power consumption of the terminal device is reduced.

It should be noted that after the display screen refreshes and displays the image, a voltage of a light-emitting device in the display screen attenuates over time, and brightness of the image decreases accordingly. When the terminal device refreshes the image again, the voltage of the light-emitting device in the display screen increases. When the image is not refreshed for a long period of time, a voltage difference between the light-emitting devices in the display screen before and after the image is refreshed is large, and a brightness difference is large. As a result, human eyes feel an abnormality, for example, screen flicker, and user experience of the terminal device is reduced.

According to the foregoing embodiments, the message indicating that the adaptive switch is turned on in S403 includes a minimum refresh rate. The message indicating the adaptive refresh in S407 includes the minimum refresh rate. Adaptively, S405 further includes: When the display screen does not receive the composited image within first preset duration after the image is refreshed, the display screen reads the frame of image from the cache, and refreshes the image and displays the frame of image. The first preset duration is related to the minimum refresh rate. The first preset duration may be a reciprocal of the minimum refresh rate.

The minimum refresh rate may be 10 Hz, 30 Hz, or any other value. This is not limited in embodiments of this application.

In this way, the minimum refresh rate of the adaptive refresh is defined, so that an abnormal phenomenon, for example, screen flicker, of the terminal device can be reduced, and user experience is improved.

In embodiments of this application, the refresh rate of the display screen may be 1 Hz, 10 Hz, 30 Hz, 40 Hz, 60 Hz, 120 Hz, or the like. A specific value of the refresh rate of the display screen is not limited in embodiments of this application.

In some embodiments, the frame rate control service may alternatively determine the minimum refresh rate based on the display screen brightness and/or the ambient light intensity.

In an possible implementation 1, the frame rate control service stores a first correspondence. The first correspondence is a relationship between the display screen brightness and the minimum refresh rate.

For example, the display screen brightness is 50 nit, and the minimum refresh rate is 10 Hz; and the display screen brightness is 60 nit, and the minimum refresh rate is 30 Hz. A specific value of the first correspondence is not limited in embodiments of this application.

In this way, the minimum refresh rate is set based on the display screen brightness, and energy consumption is reduced as much as possible in a case that the screen flicker of the terminal device is reduced.

In a possible implementation 2, the frame rate control service stores a second correspondence. The second correspondence is a relationship between the ambient light intensity and the minimum refresh rate.

For example, the ambient light intensity is 50 lux, and the minimum refresh rate is 10 Hz; and the ambient light intensity is 60 lux, and the minimum refresh rate is 30 Hz. A specific value of the second correspondence is not limited in embodiments of this application.

In this way, the minimum refresh rate is set based on the ambient light intensity, to reduce energy consumption as much as possible in a case that the screen flicker of the terminal device is reduced.

In a possible implementation 3, the frame rate control service stores a third correspondence. The third correspondence is a relationship between the display screen brightness, the ambient light intensity, and the minimum refresh rate.

For example, the display screen brightness is 50 nit, the ambient light intensity is 50 lux, and the minimum refresh rate is 10 Hz; and the display screen brightness is 60 nit, the ambient light intensity is 60 lux, and the minimum refresh rate is 30 Hz. A specific value of the third correspondence is not limited in embodiments of this application.

In this way, the minimum refresh rate is set based on the display screen brightness and the ambient light intensity, to reduce energy consumption as much as possible in a case that screen flicker of the terminal device is reduced.

According to the foregoing embodiments, the frame rate control service may further determine the minimum refresh rate based on the maximum frame rate corresponding to the foreground running application. Under a same condition, a higher maximum frame rate corresponding to the foreground running application indicates a higher minimum refresh rate.

In this way, a refresh time difference and a refresh rate difference during adaptive refresh can be reduced, and flicker during frame rate switching is further reduced.

According to the foregoing embodiments, starting of the adaptive refresh is further related to the foreground running application. Alternatively, it may be understood that the terminal device may control the display screen to be refreshed adaptively based on a specific application.

In some embodiments, the frame rate control service stores an application list. When the foreground running application is an application in the application list, the frame rate control service determines, based on the display screen brightness and/or the ambient light intensity, that the adaptive switch is turned on or turned off. When the foreground running application is not an application in the application list, the frame rate control service transmits, to the display driver, a message indicating a preset refresh rate.

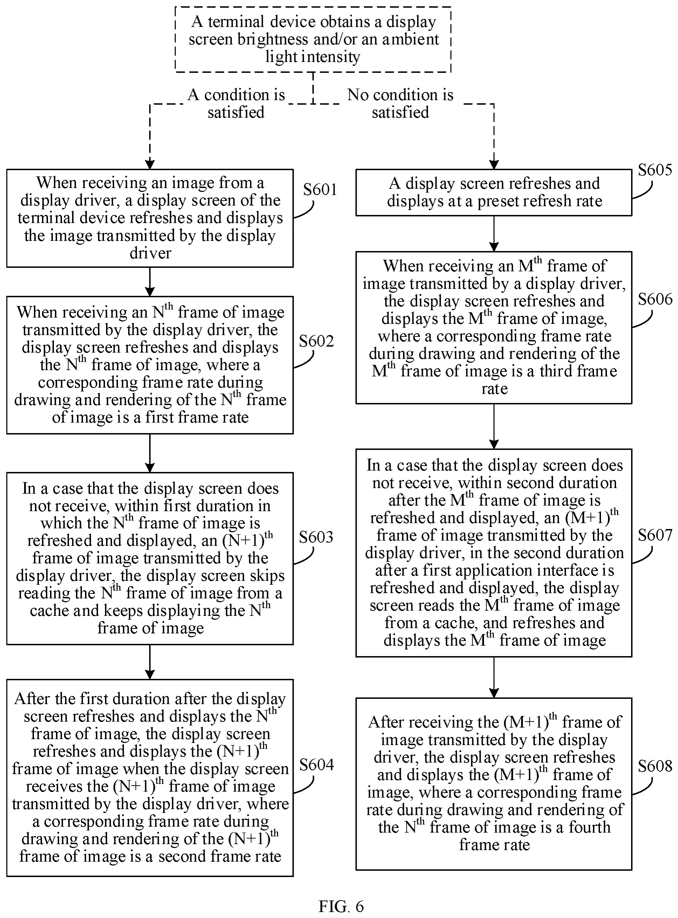

For example, FIG. 6 is a schematic flowchart of an interface display method according to an embodiment of this application. As shown in FIG. 6, the method includes the following steps.

S601: When receiving an image from a display driver, a display screen of a terminal device refreshes and displays the image transmitted by the display driver.

S602: When receiving an N^{th} frame of image transmitted by the display driver, the display screen refreshes and displays the N^{th} frame of image, where a corresponding frame rate during drawing and rendering of the N^{th} frame of image is a first frame rate.

S603: In a case that the display screen does not receive, within first duration in which the N^{th} frame of image is refreshed and displayed, an (N+1)^{th} frame of image transmitted by the display driver, the display screen skips reading the N^{th} frame of image from a cache and keeps displaying the N^{th} frame of image; where the first duration is longer than periodicity duration corresponding to the first frame rate.

S604: After the first duration after the display screen refreshes and displays the N^{th} frame of image, the display screen refreshes and displays the (N+1)^{th} frame of image when the display screen receives the (N+1)^{th} frame of image transmitted by the display driver, where a corresponding frame rate during drawing and rendering of the (N+1)^{th} frame of image is a second frame rate, and the second frame rate is less than the first frame rate.

It may be understood that the first frame rate may be 60 frames per second, 120 frames per second, or any other value, and the second frame rate may be 30 frames per second, 60 frames per second, or any other value. This is not limited in embodiments of this application.

In this way, when an application frame rate decreases, the terminal device can adaptively adjust a refresh rate of the display screen to be reduced, to reduce an image refresh frequency of the display screen and to reduce power consumption.

In addition, the refresh rate of the display screen is adjusted based on the image transmitted for display, and the application frame rate does not need to be identified. The foregoing method may be used in a scenario with a low frame rate, for example, a video scenario or a camera scenario, which has many coverage scenarios, a wide application range, and high practicability.

Optionally, the terminal device prestores an application list. An application corresponding to the N^{th} frame of image is an application in the application list, and an application corresponding to the (N+1)^{th} frame of image and the application corresponding to the N^{th} frame of image are same.

In this way, the terminal device can determine, based on the application, whether to perform the adaptive refresh.

Optionally, the N^{th} frame of image is an image that includes an on-screen comment, and the (N+1)^{th} frame of image is an image that does not includes an on-screen comment.

In this way, when there is an on-screen comment, the refresh rate of the display screen is high, to meet smoothness of on-screen comment display. When there is no on-screen comment, the refresh rate of the display screen is reduced, to reduce power consumption of the terminal device, and improve user experience.

Optionally, the N^{th} frame of image is an image corresponding to a first scene. The (N+1)^{th} frame of image is an image corresponding to a second scene, the first scene is a battle scene of a game application, and the second scene is a non-battle scene of the game application.

In this way, in a scenario like a game battle scene with a high requirement on smoothness, the refresh rate of the display screen is high, to meet smoothness of on-screen comment display. In a scenario like a game hall scene with a low requirement on smoothness, the refresh rate of the display screen is reduced, to reduce the power consumption of the terminal device, and improve the user experience.

Optionally, the N^{th} frame of image is an image that includes a motion effect, and the (N+1)^{th} frame of image is an image that does not include a motion effect.

In this way, when there is a motion effect, the refresh rate of the display screen is high, to meet smoothness of on-screen comment display. When there is no motion effect, the refresh rate of the display screen is reduced, to reduce power consumption of the terminal device, and improve user experience.

According to the foregoing embodiments, the terminal device may alternatively determine, based on the display screen brightness, the ambient light intensity, and/or the like, that the display screen is refreshed adaptively or is refreshed at a particular refresh rate, and determine to perform S601 to S604 or perform S605 to S608 described below.

In this way, the terminal device can implement adaptive refresh in some scenarios, to reduce the power consumption. In some other scenarios, refresh is performed at a particular refresh rate, to reduce a problem, for example, screen flicker caused by switching of the refresh rate.

In a possible implementation 1, when the display screen brightness is greater than a first value, the terminal device performs S601 to S604. When the display screen brightness is less than or equal to the first value, the terminal device performs S605 to S608.

S605: The display screen refreshes and displays at a preset refresh rate, where the preset refresh rate is related to a foreground running application of the terminal device.

S606: When receiving an M^{th} frame of image transmitted by the display driver, the display screen refreshes and displays the M^{th} frame of image, where a corresponding frame rate during drawing and rendering of the M^{th} frame of image is a third frame rate.

S607: In a case that the display screen does not receive, within second duration after M^{th} frame of image is refreshed and displayed, an (M+1)^{th} frame of image transmitted by the display driver, in the second duration after a first application interface is refreshed and displayed, the display screen reads the M^{th} frame of image from the cache, and refreshes and displays the M^{th} frame of image, where the second duration is periodicity duration corresponding to the third frame rate.

S608: After receiving the (M+1)^{th} frame of image transmitted by the display driver, the display screen refreshes and displays the (M+1)^{th} frame of image, where a corresponding frame rate during drawing and rendering of the N^{th} frame of image is a fourth frame rate, and the fourth frame rate is less than third frame rate. It may be understood that the third frame rate may be 60 frames per second, 120 frames per second, or any other value, and the fourth frame rate may be 30 frames per second, 60 frames per second, or any other value. This is not limited in embodiments of this application.

In this way, the terminal device can control adaptive refresh when the display screen brightness is high, to reduce a refresh frequency of the display screen and reduce power consumption. When the display screen brightness is small, the terminal device may control the terminal device to refresh at the preset refresh rate, to reduce a problem, for example, screen flicker caused by switching of the refresh rate.

In a possible implementation 2, when the ambient light intensity is greater than a second value, the terminal device performs S601 to S604. When the ambient light intensity is less than or equal to the second value, the terminal device performs S605 to S608.

In this way, the terminal device can control adaptive refresh when the ambient light intensity is large, to reduce a refresh frequency of the display screen and reduce the power consumption. When the ambient light intensity is small, the terminal device may control the terminal device to refresh at the preset refresh rate, to reduce problems such as the screen flicker caused by switching of the refresh rate.

In a possible implementation 3, when the display screen brightness is greater than the first value, or the ambient light intensity is greater than the second value, the terminal device performs S601 to S604. When the display screen brightness is less than or equal to the first value, and the ambient light intensity is less than or equal to the second value, the terminal device performs S605 to S608.

In this way, when the display screen brightness is high, or the ambient light intensity is high, the terminal device can control the adaptive refresh to reduce the refresh frequency of the display screen and reduce the power consumption. When the display screen brightness is low, and the ambient light intensity is low, the terminal device can control the terminal device to refresh at the preset refresh rate, to reduce a problem, for example, screen flicker caused by switching of the refresh rate.

In a possible implementation 4, when the display screen brightness is greater than the first value, and the ambient light intensity is greater than the second value, the terminal device performs S601 to S604. When the display screen brightness is less than or equal to the first value, or the ambient light intensity is less than or equal to the second value, the terminal device performs S605 to S608.

In this way, when the display screen brightness is high, and the ambient light intensity is high, the terminal device can control the adaptive refresh to reduce the refresh frequency of the display screen and reduce the power consumption. When the display screen brightness is low, or the ambient light intensity is low, the terminal device can control the terminal device to refresh at the preset refresh rate, to reduce a problem, for example, the screen flicker caused by switching of the refresh rate.

The terminal device may determine, according to any one of the foregoing possible implementations 1 to 4, that the display screen is refreshed adaptively or refreshed at a preset frequency. This is not limited herein.

The adaptive refresh that satisfies a preset condition and is provided in embodiments of this application is described below with reference to a specific application scenario.

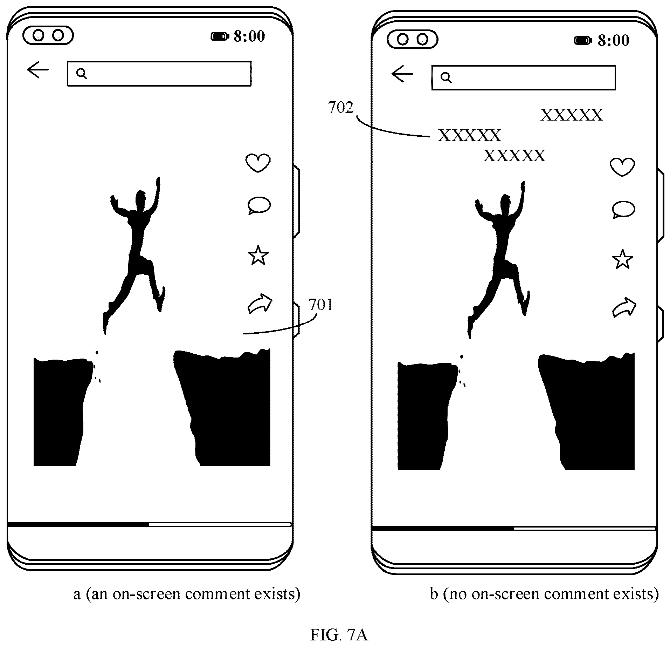

For example, FIG. 7A is a schematic diagram of an application scenario according to an embodiment of this application. The application scenario is a video playback scenario. As shown in a in FIG. 7A, in the application scenario, a terminal device displays a first video 701. During playback of the first video 701, the terminal device may display an on-screen comment 702 (as shown in b in FIG. 7A).

It may be understood that when the video is played, the video application draws and renders a video frame at a first frame rate, and the terminal device composites the video frame at the first frame rate. When there is an on-screen comment that needs to be displayed, the terminal device composites the video frame and the on-screen comment at a second frame rate.

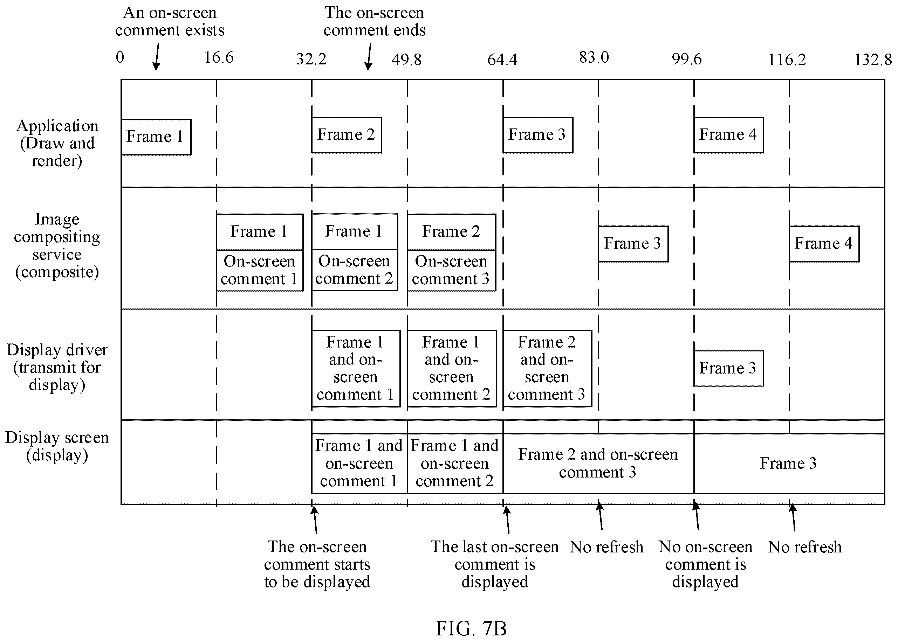

For example, FIG. 7B is a schematic diagram of a display procedure according to an embodiment of this application. A video application draws and renders a video frame at 30 frames per second. The terminal device draws and renders an on-screen comment at 60 frames per second. As shown in FIG. 7B, the video frame corresponds to a frame 1, a frame 2, a frame 3, and a frame 4. The on-screen comment corresponds to an on-screen comment 1, an on-screen comment 2, and an on-screen comment 3.

As shown in FIG. 7B, at 0 ms, the video application draws and renders the frame 1.

At 16.6 ms, the video application does not perform drawing and rendering. Because drawing and rendering of the frame 1 are completed, and drawing and rendering of the on-screen comment 1 are completed, an image compositing service composites the frame 1 and the on-screen comment 1.

At 33.2 ms, the video application draws and renders the frame 2. Because drawing and rendering of the frame 2 are not completed, drawing and rendering of the on-screen comment 2 are completed, the image compositing service composites the frame 1 and the on-screen comment 2. Because the compositing of the frame 1 and the on-screen comment 1 ends, a display driver transmits the composited frame 1 and on-screen comment 1 to a display screen for display. The display screen starts to display the frame 1 and the on-screen comment 1.

At 49.8 ms, the video application does not perform drawing and rendering. Because drawing and rendering of the frame 2 are completed, and drawing and rendering of the on-screen comment 3 are completed, the image compositing service composites the frame 2 and the on-screen comment 3. Because the compositing of the frame 1 and the on-screen comment 2 ends, the display driver transmits the composited frame 1 and on-screen comment 2 to the display screen for display. The display screen starts to display the frame 1 and the on-screen comment 2.

At 64.4 ms, the video application draws and renders the frame 3. Because drawing and rendering of the frame 3 are not completed, and there is no on-screen comment to be drawn and rendered, the compositing service has no frame to be composited and does not perform compositing. Because the compositing of the frame 2 and the on-screen comment 3 ends, the display driver transmits the composited frame 2 and on-screen comment 3 to the display screen for display. The display screen starts to display the frame 2 and the on-screen comment 3.

Because the image compositing service does not perform a compositing operation at 49.8 ms, the display driver transmits no composited image to the display screen. The display screen does not perform refresh and continues to display the frame 2 and the on-screen comment 3.

At 83.0 ms, the video application does not perform drawing and rendering. Because drawing and rendering of the frame 3 are completed, the image compositing service composites the frame 3. Because the image compositing service does not perform the compositing operation at 64.4 ms, the display driver transmits no image to the display screen, and the display screen does not perform refreshing and keeps displaying the frame 2 and the on-screen comment 3.

At 99.6 ms, the video application draws and renders the frame 4. Because drawing and rendering of the frame 4 are not completed, and there is no on-screen comment to be drawn and rendered, the compositing service has no frame to be composited and does not perform compositing. Because the compositing of the frame 3 ends, the display driver transmits the composited frame 3 to the display screen for display. The display screen performs refreshing and starts to display the frame 3.

At 116.2 ms, the video application does not perform drawing and rendering. Because drawing and rendering of the frame 4 are completed, the image compositing service composites the frame 4. Because the image compositing service does not perform the compositing operation at 99.6 ms, the display driver transmits no image to the display screen, and the display screen does not perform refreshing and keeps displaying the frame 3.

It can be learned from FIG. 7B that the terminal device adaptively adjusts the refresh rate depending on whether the on-screen comment is displayed. Specifically, the display screen refreshes and displays the on-screen comment at 32.2 ms, 49.8 ms, and 64.4 ms. A time interval for on-screen comment display is 16.6 ms. When the refresh and display of the on-screen comment end, the display screen refreshes and displays the frame 3 at 99.6 ms, and a time interval for refresh and display of the video frames is 32.2 ms. Alternatively, it may be understood that a corresponding refresh rate is 30 Hz when an on-screen comment is refreshed and displayed, and a refresh rate corresponding to a video frame is 60 Hz when no on-screen comment is refreshed and displayed.

In this way, the terminal device adaptively adjusts the refresh rate depending on whether the on-screen comment is displayed, to reduce the power consumption of the terminal device. In addition, a frame rate at which the image compositing service composites an image, a frame rate at which an application draws and renders an image, and the like do not need to be adjusted. This is easy to implement, and a refresh rate response speed is high.

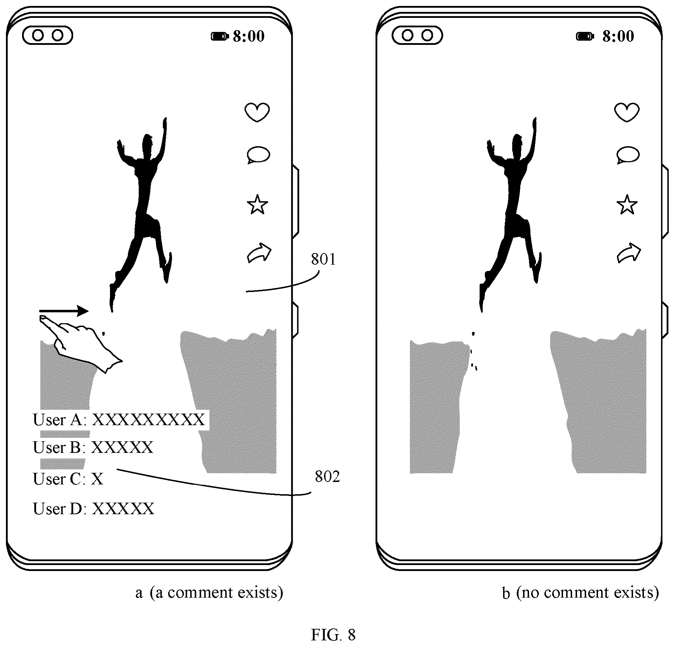

For example, FIG. 8 is a schematic diagram of an application scenario according to an embodiment of this application. The application scenario is a live streaming scenario. As shown in a in FIG. 8, in the application scenario, a terminal device displays a live video 801 and a comment 802 (which means that an on-screen comment is displayed). When a finger of a user slides to the right on a display screen, the terminal device receives an operation indicating to clear the screen (after the screen is cleared, it means that an on-screen comment is not displayed), and the terminal device enters an interface shown in b in FIG. 8. The interface does not display the comment 802. For a specific display procedure, refer to the foregoing related descriptions of FIG. 7B. Details are not described herein again.

It should be understood that the method for adaptively adjusting a refresh rate provided in embodiments of this application may be applied to another scenario, for example, a camera code scan scenario, a game scene, or a video pause scenario. This is not limited herein.

The method provided in embodiments of this application is described above. An apparatus provided in embodiments of this application for performing the foregoing method is described below. It may be understood by a person skilled in the art that the method and the apparatus may be combined and mutual reference may be made, and that a related apparatus provided in embodiments of this application may perform the steps of the foregoing method.

The method provided in embodiments of this application may be applied to an electronic device with a display function. The electronic device includes a terminal device. For a specific device form and the like of the terminal device, refer to the foregoing related descriptions. Details are not described herein again.

An embodiment of this application provides a terminal device. The terminal device includes includes: a processor and a memory. The memory stores computer-executable instructions. The processor executes the computer-executable instructions stored in the memory, to cause the terminal device to perform the foregoing method.

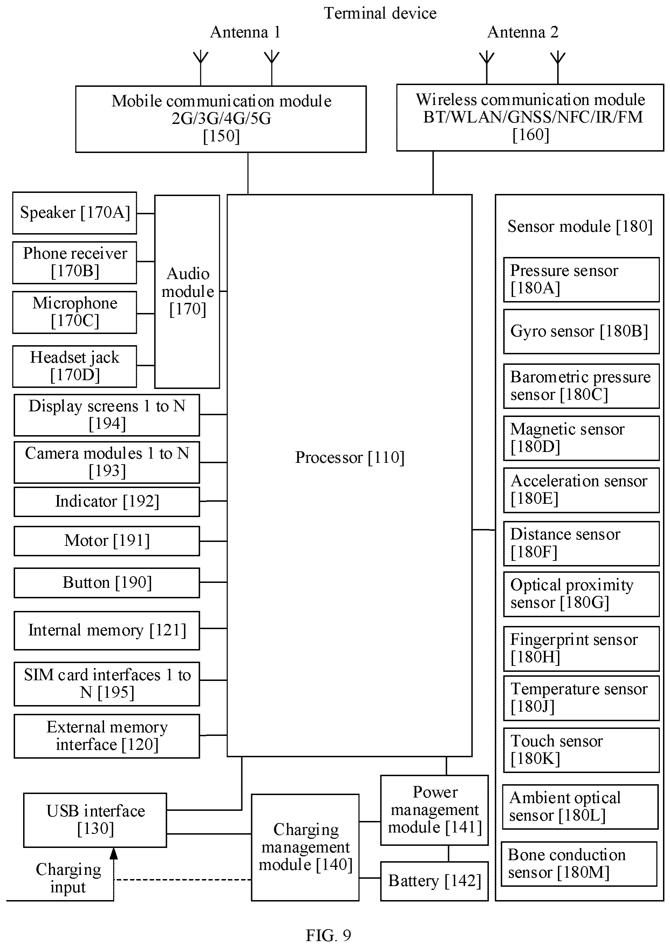

For example, FIG. 9 is a schematic diagram of a structure of a terminal device according to an embodiment of this application. As shown in FIG. 9, the terminal device include the terminal device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a phone receiver 170B, a microphone 170C, a headset jack 170D, a sensor module 180, a button 190, a motor 191, an indicator 192, a camera module 193, a display screen 194, a subscriber identity module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient optical sensor 180L, a bone conduction sensor 180M, and the like.

It may be understood that the structure shown in this embodiment of this application does not constitute a specific limitation on the terminal device. In some other embodiments of this application, the terminal device may include more or fewer components than those shown in the figure, or some components may be combined, or some components may be split, or different component arrangements may be used. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a sequence signal, and control obtaining and executing of instructions.

A memory may be further disposed in the processor 110, and is configured to store instructions and data. In some embodiments, the memory in the processor 110 is a cache memory. The memory may store instructions or data that is recently used or is cyclically used by the processor 110. If the processor 110 needs to use the instructions or the data again, the processor may directly invoke the instructions or the data from the memory. This avoids repeated access and reduces waiting time of the processor 110, so that system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

It may be understood that an interface connection relationship between the modules illustrated in this embodiment of this application is merely an example for description, and does not constitute a limitation on the structure of the terminal device. In some other embodiments of this application, the terminal device may alternatively use an interface connection manner different from that in the foregoing embodiment, or use a combination of a plurality of interface connection manners.

The charging management module 140 is configured to receive a charging input from a charger. The charger may be a wireless charger or may be a wired charger. In some wired charging embodiments, the charging management module 140 may receive charging input from the wired charger via the USB interface 130. In some embodiments of wireless charging, the charging management module 140 may receive a wireless charging input through a wireless charging coil of the terminal device. While charging the battery 142, the charging management module 140 may further supply power to the electronic device through the power management module 141.

The power management module 141 is configured to connect the battery 142, the charging management module 140, and the processor 110. The power management module 141 receives an input of the battery 142 and/or an input of the charging management module 140, and supplies power to the processor 110, the internal memory 121, the display screen 194, the camera module 193, the wireless communication module 160, and the like. The power management module 141 may further be configured to monitor parameters such as a battery capacity, a quantity of battery cycles, and a battery health state (power leakage and impedance). In some other embodiments, the power management module 141 may alternatively be disposed in the processor 110. In some other embodiments, the power management module 141 and the charging management module 140 may alternatively be disposed in a same device.

The terminal device implements a display function by using the GPU, the display screen 194, the application processor, and the like. The GPU is a microprocessor for image processing and is connected to the display screen 194 and the application processor. The GPU is configured to perform mathematical and geometric calculations for graphics rendering. The processor 110 may include one or more GPUs that execute program instructions to generate or change display information.

The display screen 194 is configured to display an image, a video, and the like. The display screen 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a Miniled, a MicroLed, a Micro-oLed, a quantum dot light emitting diode (quantum dot light emitting diodes, QLED), or the like. In some embodiments, the terminal device may include 1 or N display screens 194, where N is a positive integer greater than 1.

The terminal device may implement a photographing function through the ISP, the camera module 193, the video codec, the GPU, the display screen 194, the application processor, and the like.

The ISP is configured to process data fed back by the camera module 193. For example, during photographing, a shutter is opened, light is transferred to a photosensitive element of the camera module through a lens, an optical signal is converted into an electrical signal, and the photosensitive element of the camera module transfers the electrical signal to the ISP for processing, to convert the electrical signal into an image visible to naked eyes. The ISP may further perform algorithm optimization on noise, brightness, and complexion of the image. The ISP may further optimize parameters such as exposure and color temperature of a photographed scene. In some embodiments, the ISP may be disposed in the camera module 193.

The camera module 193 is configured to capture a still image or a video. In some embodiments, the terminal device may include one or N camera modules 193, where N is a positive integer greater than 1. The plurality of camera modules 193 may be of different types. For example, the camera module 193 may include a camera module configured to obtain a color image, a TOF camera module, or the like. In embodiments of this application, the camera module may be understood as camera. The camera module includes an AO camera, a TOF camera, and the like in this embodiment of this application.

The external memory interface 120 may be configured to connect to an external storage card, for example, a micro SD card, to extend a storage capability of the terminal device. The external storage card communicates with the processor 110 through the external memory interface 120, to implement a data storage function. For example, files such as music and a video are stored in the external storage card.

The internal memory 121 may be configured to store computer-executable program code, and the executable program code includes instructions. The internal memory 121 may include a program storage area and a data storage area.

The terminal device may implement an audio function through the audio module 170, the speaker 170A, the phone receiver 170B, the microphone 170C, the headset jack 170D, the application processor, and the like, for example, implement a music playback function and a recording function.

The button 190 includes a power button, a volume button, and the like. The button 190 may be a mechanical button, or may be a touch-type button. The terminal device may receive a button input, and generate a key signal input related to user settings and function control of the terminal device. The indicator 192 may be an indicator light, and may be configured to indicate a charging state and a power change, or may also be configured to indicate a message, a missed call, a notification, and the like.

In addition, in the device, an operating system further runs on the foregoing components, for example, an iOS operating system, an Android (android) operating system, or a windows operating system. An application may be installed and run on the operating system.

A software system of the terminal device may use a layered architecture, an event-driven architecture, a microcore architecture, a micro service architecture, or a cloud architecture. Details are not described here again.

An embodiment of this application provides a chip. The chip includes a processor. The processor is configured to invoke a computer program in a memory, to perform the technical solutions in the foregoing embodiments. Implementation principles and technical effects thereof are similar to those in the related embodiments. Details are not described herein again.

An embodiment of this application further provides a computer-readable storage medium. The computer-readable storage medium stores computer program instructions. When the computer program is executed by the processor, the foregoing method is implemented. The method described in the foregoing embodiments may be fully or partially implemented by software, hardware, firmware, or any combination thereof. If implemented in software, the functions may be stored on a computer-readable medium or transmitted over as one or more instructions or code on the computer-readable medium. The computer-readable medium may include a computer storage medium and a communication medium, and may further include any medium that can transmit a computer program from one place to another. The storage medium may be any target medium that may be accessed by a computer.

In a possible implementation, the computer-readable medium may include a RAM, a ROM, a compact disc read-only memory (compact disc read-only memory, CD-ROM) or another optical disk memory, a magnetic disk memory or another magnetic storage device, or any other medium that is to carry or store required program code in a form of an instruction or a data structure, and may be accessed by a computer. Moreover, any connection is appropriately referred to as a computer-readable medium. For example, if software is transmitted from a website, a server or another remote source by using a coaxial cable, an optical fiber cable, a twisted pair, a digital subscriber line (Digital Subscriber Line, DSL) or wireless technologies (such as infrared ray, radio, and microwave), the coaxial cable, optical fiber cable, twisted pair, DSL or wireless technologies such as infrared ray, radio, and microwave are included in the definition of the medium. A magnetic disk and an optical disc used herein include an optical disc, a laser disc, an optical disc, a digital versatile disc (Digital Versatile Disc, DVD), a floppy disk, and a blue ray disc, where the magnetic disk generally reproduces data in a magnetic manner, and the optical disc reproduces data optically by using laser. A combination of the foregoing should also be included in the scope of the computer readable medium.

An embodiment of this application provides a computer program product. The computer program product includes a computer program. The computer program, when run, causes a computer to perform the foregoing method.

The embodiments of this application are described with reference to the flowcharts and/or block diagrams of the method, the device (system), and the computer program product according to embodiments of this application. It should be understood that computer program instructions can implement each procedure and/or block in the flowcharts and/or block diagrams and a combination of procedures and/or blocks in the flowcharts and/or block diagrams. These computer program instructions may be provided for a general-purpose computer, a dedicated computer, an embedded processor, or a processor of another programmable device to generate a machine, so that the unit executed by a computer or the processor of another programmable data processing device generate an apparatus for implementing a specific function in one or more procedures in the flowcharts and/or in one or more blocks in the block diagrams.

It should be noted that the user information (including, but not limited to, user equipment information, user personal information, and the like) and data (including, but not limited to, data for analysis, stored data, displayed data, and the like) involved in this application all are information and data authorized by the user or fully authorized by each party. The collection, use, and processing of relevant data need to comply with relevant laws and regulations, and corresponding operation portals are provided for the user to choose to authorize or refuse.

The foregoing specific implementations further describe the objectives, technical solutions in detail, and beneficial effects of the present invention. It should be appreciated that the foregoing descriptions are merely specific implementations of the present invention, but are not intended to limit the protection scope of the present invention. Any modification, equivalent replacement, or improvement made based on the technical solutions of the present invention should fall within the protection scope of the present invention.

## Claims

1. An interface display method, applied to a terminal device, wherein the terminal device comprises a display screen and a display driver, and the method comprises:
refreshing and displaying, by the display screen when receiving an image transmitted by the display driver, the image transmitted by the display driver;
when receiving an N^{th} frame of image transmitted by the display driver, refreshing and displaying, by the display screen, the N^{th} frame of image, wherein a corresponding frame rate during drawing and rendering of the N^{th} frame of image is a first frame rate;
in a case that the display screen does not receive, within first duration in which the N^{th} frame of image is refreshed and displayed, an (N+1)^{th} frame of image transmitted by the display driver, skipping reading, by the display screen, the N^{th} frame of image from a cache and keeping displaying the N^{th} frame of image, wherein the first duration is longer than periodicity duration corresponding to the first frame rate; and
after the first duration after the display screen refreshes and displays the N^{th} frame of image, refreshing and displaying, by the display screen, the (N+1)^{th} frame of image when the display screen receives the (N+1)^{th} frame of image transmitted by the display driver, wherein a corresponding frame rate during drawing and rendering of the (N+1)^{th} frame of image is a second frame rate, and the second frame rate is less than the first frame rate.

2. The method according to claim 1, wherein before the refreshing and displaying, by the display screen when receiving an image transmitted by the display driver, the method further comprises:
obtaining, by the terminal device, display screen brightness and/or ambient light intensity; and
the refreshing and displaying, by the display screen when receiving an image transmitted by the display driver comprises:
when the display screen brightness is greater than a first value, and/or the ambient light intensity is greater than a second value, refreshing and displaying, by the display screen when receiving the image transmitted by the display driver.

3. The method according to claim 2, wherein the method further comprises:
determining, by the terminal device, a first refresh rate based on the display screen brightness and/or the ambient light intensity; and
in a case that the display screen does not receive, within third duration after refreshing and displaying the N^{th} frame of image, the (N+1)^{th} frame of image transmitted by the display driver, in the third duration after the N^{th} frame of image is refreshed and displayed, reading, by the display screen, the N^{th} frame of image from the cache, and refreshing and displaying the N^{th} frame of image, wherein the third duration is periodicity duration corresponding to the first refresh rate.

4. The method according to claim 3, wherein
the terminal device stores a first correspondence; the first correspondence is a relationship between the display screen brightness and the first refresh rate; and the determining, by the terminal device, a first refresh rate based on the display screen brightness and/or the ambient light intensity comprises: determining, by the terminal device, the first refresh rate based on the display screen brightness and the first correspondence; or
the terminal device stores a second correspondence; the second correspondence is a relationship between the ambient light intensity and the first refresh rate; and the determining, by the terminal device, a first refresh rate based on the display screen brightness and/or the ambient light intensity comprises: determining, by the terminal device, the first refresh rate based on the ambient light intensity and the second correspondence; or
the terminal device stores a third correspondence; the third correspondence is a relationship between the display screen brightness, the ambient light intensity, and the first refresh rate; and the determining, by the terminal device, a first refresh rate based on the display screen brightness and the ambient light intensity comprises: determining, by the terminal device, the first refresh rate based on the display screen brightness, the ambient light intensity, and the third correspondence.

5. The method according to any one of claims 1 to 4, wherein the method further comprises:
when the display screen brightness is less than or equal to the first value, and the ambient light intensity is less than or equal to the second value, refreshing and displaying, by the display screen, at a preset refresh rate, wherein the preset refresh rate is related to a foreground running application of the terminal device;
when receiving an M^{th} frame of image transmitted by the display driver, refreshing and displaying, by the display screen, the M^{th} frame of image, wherein a corresponding frame rate during drawing and rendering of the M^{th} frame of image is a third frame rate;
in a case that the display screen does not receive, within second duration after the M^{th} frame of image is refreshed and displayed, an (M+1)^{th} frame of image transmitted by the display driver, in the second duration after a first application interface is refreshed and displayed, reading, by the display screen, the M^{th} frame of image from the cache, and refreshing and displaying the M^{th} frame of image, wherein the second duration is periodicity duration corresponding to the third frame rate; and
after receiving the (M+1)^{th} frame of image transmitted by the display driver, refreshing and displaying, by the display screen, the (M+1)^{th} frame of image, wherein a corresponding frame rate during drawing and rendering of the N^{th} frame of image is a fourth frame rate, and the fourth frame rate is less than the third frame rate.

6. The method according to claims 1 to 5, wherein the terminal device pre-stores an application list; and
an application corresponding to the N^{th} frame of image is an application in the application list, and an application corresponding to the (N+1)^{th} frame of image and the application corresponding to the N^{th} frame of image are same.

7. The method according to any one of claims 1 to 6, wherein the N^{th} frame of image is an image that comprises an on-screen comment, and the (N+1)^{th} frame of image is an image that does not comprise an on-screen comment.

8. The method according to any one of claims 1 to 6, wherein the N^{th} frame of image is an image corresponding to a first scene; and the (N+1)^{th} frame of image is an image corresponding to a second scene, the first scene is a battle scene of a game application, and the second scene is a non-battle scene of the game application.

9. The method according to any one of claims 1 to 6, wherein the N^{th} frame of image is an image that comprises a motion effect, and the (N+1)^{th} frame of image is an image that does not comprise a motion effect.

10. A terminal device, comprising: a processor and a memory, wherein
the memory stores computer-executable instructions; and
the processor executes the computer-executable instructions stored in the memory, to cause the terminal device to perform the method according to any one of claims 1 to 9.

11. A computer-readable storage medium, wherein the computer-readable storage medium stores a computer program, and when the computer program is executed by a processor, the method according to any one of claims 1 to 9 is implemented.

12. A computer program product, comprising a computer program, wherein when the computer program is run, a computer is enabled to perform the method according to any one of claims 1 to 9.
